# EUROPÄISCHE PATENTSCHRIFT

(11) **EP 1 668 761 B1**
(45) Veröffentlichungstag und Bekanntmachung des Hinweises auf die Patenterteilung: **18.02.2009**
(21) Anmeldenummer: 04740502.2
(22) Anmeldetag: 30.06.2004
(51) Int. Cl.: H02J 9/00

(54) **KRAFTFAHRZEUGUMRICHTER**
FREQUENCY CONVERTER FOR A MOTOR VEHICLE
CONVERTISSEUR DE VEHICULE AUTOMOBILE

(30) Priorität: 06.08.2003 DE 10335866
(43) Veröffentlichungstag der Anmeldung: 14.06.2006
(73) Patentinhaber: Volkswagen Aktiengesellschaft, 38436 Wolfsburg (DE)
(72) Erfinder: FROHNE, Hans-Joachim, 38165 Lehre (DE); KLINKIG, Andreas, 38162 Cremlingen (DE); BORNGRÄBER, Ralf, Dr., 38165 Lehre (DE)
(86) Internationale Anmeldenummer: PCT/EP2004/007130
(87) Internationale Veröffentlichungsnummer: WO 2005/020406

(56) Entgegenhaltungen:
- WO-A-01/18625
- WO-A-01/52280
- DE-A- 3 743 316
- US-A- 5 332 958
- US-A- 5 865 635
- US-B1- 6 459 170

## Beschreibung

Die Erfindung betrifft einen Kraftfahrzeugumrichter mit mindestens einer Laststeckdose. Moderne Kraftfahrzeuge besitzen eine Vielzahl von elektrischen Komponenten, welche dem Fahrzeugführer, als auch weiteren Insassen, eine Vielzahl von Komfort- und Sicherheitsfunktionen zur Verfügung stellen. Sofern die Fahrzeuginsassen zusätzliche elektrische Geräte an das Kraftfahrzeugbordnetz anschließen möchten, sind sie üblicherweise an die dort vorherrschende Betriebsspannung angewiesen. Bekannt sind dabei elektrische Geräte, mit einem Anschlussstecker, welcher beispielsweise in einen Zigarettenanzünder eingesteckt wird und somit eine elektrische Energieversorgung der zusätzlichen Geräte herbeiführt.

Aufgrund des relativ geringen Spannungsniveaus sind Berührungen von spannungsführenden Teilen durch die Fahrzeuginsassen unkritisch. Sofern jedoch Geräte mit einer höheren Spannung (Gleich- als auch Wechselspannung) im Fahrzeug betrieben werden, sind Schutzmaßnahmen zu treffen, damit ein unbeabsichtigtes Berühren der spannungsführenden Teile vermieden wird. Dabei ist auch eine Kindersicherung sinnvoll.

Das Deutsche Gebrauchsmuster DE 91 11 135 U1 beschreibt eine Kindersicherung in Schutzkontaktsteckdosen. Dabei werden mittels Kontaktstiften Schaltelemente ausgelöst, weiche durch das Stecken des Steckers die elektrische Energieversorgung auf die Steckkontakte durchschalten.

Aus der Offenlegungsschrift DE 33 43 270 A1 ist eine schaltbare Einphasenwechselspannungs-Steckdose mit in einem Steckdosensockel angeordneter Leiter- und Neutralleiter-Steckbuchse bekannt, wobei über einen schließbaren Schaltkontakt an die Steckbuchse eine Netzspannung anlegbar ist. Die Netzspannung wird dabei abhängig von der Unterschreitung eines Widerstandsschwellwertes zugeschaltet, wohingegen sie bei Überschreitung dieses Schwellwertes nicht zugeschaltet wird.

Die DE 37 43 316 A1 offenbart ein Fahrzeugbordnetzsystem mit einem auf höherer Spannung befindlichen Wechselspannungszwischenkreis, aus dem über verschiedenartige Wandler die im Bordnetz benötigten Gleich- bzw. Wechselspannungen ausgekoppelt werden. Hierfür kann auch ein Wandler vorgesehen sein, der eine Steckdose im Fahrzeug mit 220 V, 50 Hz versorgt.

Aufgabe der Erfindung ist es, einen Kraftfahrzeugumrichter mit einer Laststeckdose zur Bereitstellung von durch den Benutzer beliebig verwendbaren Energie anzugeben, der erst bei einer durch den Kraftfahrzeugumrichter erfassbaren unmittelbaren Benutzungsabsicht in einen benutzbaren Zustand übergeht.

Diese Aufgabe wird durch die Merkmale des Anspruchs 1 gelöst. Vorteilhafte Weiterbildungen der Erfindung sind in den Unteransprüchen dargestellt.

Dadurch, dass der Kraftfahrzeugumrichter erst durch das Stecken eines elektrischen Laststeckers in die Laststeckdose betriebsbereit schaltbar ist, wobei der Kraftfahrzeugumrichter oder die Laststeckdose Mittel zum Sensieren einer elektrischen Last aufweist, wobei bei einer an den Kraftfahrzeugumrichter angeschlossenen, sensierten elektrischen Last der Kraftfahrzeugumrichter betriebsbereit schaltbar ist, oder eine Betriebsbereitschaltung durch einen durch das Stecken des Laststeckers auslösbaren Betätigungsmechanismus in der Laststeckdose durchführbar ist, ergeben sich eine Reihe von Vorteilen. Im folgenden wird unter einem Kraftfahrzeugumrichter ein Wechsel- und/oder Gleichrichter und/oder Hoch- und/oder Tiefsetzsteller verstanden, der beispielsweise eine oder mehrere unterschiedliche Spannungen in eine oder mehrere andere Spannungen umwandeln kann, welche auch eine unterschiedliche Frequenz- und/oder Spannungshöhe und/oder Spannungsform aufweisen können.

Da der Kraftfahrzeugumrichter nur bei gestecktem Laststecker betriebsbereit geschaltet ist, entsteht im Umrichter somit auch eine geringere elektrische Verlustleistung. Damit werden Leerlaufverluste minimiert und somit können notwendige Kühlungsmaßnahmen verringert werden. Die Verfügbarkeit des Umrichters im Kraftfahrzeug wird verlängert, da sich die Lebensdauer unter anderem auch nach seiner Betriebsbereitschaft berechnet.

Auch können beispielsweise durch induktive, kapazitive oder ohmsche Sensierung elektrische Lasten detektiert werden. Ein Kindersicherungsschutz kann beispielsweise darin bestehen, dass bei Vorliegen bestimmter kapazitiver, induktiver oder ohmscher Lastschwellwerte der Kraftfahrzeugumrichter erst betriebsbereit geschaltet wird.

Im Falle des auslösbaren Betätigungsmechanismus wird eine einfache Zuschaltung des Kraftfahrzeugumrichters durch eine mechanische Betätigung ermöglicht.

Dadurch, dass die elektrischen Kontakte der Laststeckdose durch den Betätigungsmechanismus abdeckbar und/oder freigebbar sind, wird zusätzlich ein mechanisch betätigbarer Schutz vor dem Berühren der elektrischen Kontakte gewährleistet.

Eine weitere vorteilhafte Weiterbildung der Erfindung ist dadurch gegeben, dass mit dem Betätigungsmechanismus und/oder den Mitteln zum Sensieren einer elektrischen Last ein elektrischer Ansteuerkreis des Kraftfahrzeugumrichters aktivierbar ist. Somit wird der Laststrom nicht direkt durch den Laststecker unterbrochen, sondern indirekt und beispielsweise mit einem Relais oder einem Halbleiterschaltelement. Der Ansteuerkreis kann dabei im Kraftfahrzeugumrichter selbst als auch außerhalb hierzu angeordnet sein.

Dadurch, dass mit dem Kraftfahrzeugumrichter mindestens eine Gleichspannung in mindestens eine Wechselspannung umrichtbar ist, ist es möglich, den Kraftfahrzeugumrichter an verschiedene Ein- und Ausgangsspannungen anzupassen.

Weiterhin vorteilhaft ist es, dass die Ausgangswechselspannung auf international vorkommende Nennwechselspannungen einstellbar ist, insbesondere 230 V, 115 V und 100 V. Damit lassen sich Kraftfahrzeuge mit Kraftfahrzeugumrichtem in Ländern betreiben, welche unterschiedliche Stromversorgungsnennspannungen besitzer. Der Kraftfahrzeugumrichter ist in dem Fall, dass eine andere Ausgangsnennspannung benötigt wird, lediglich auf die Nennspannung einzustellen. Dabei kann es vorteilhaft sein, wenn die Laststeckdose entweder universell ausgebildet ist, so dass mehrere Steckerformen aufnehmbar sind oder dass die Laststeckdose auswechselbar ausgeführt ist.

Dadurch, dass die Nennfrequenz der Wechselspannung auf 50 Hz oder 60 Hz einstellbar ist, lassen sich weitere nationale Gegebenheiten der Stromversorgungsnetze, insbesondere die Nennfrequenz, einstellen.

Eine vorteilhafte Weiterbildung der Erfindung besteht darin, dass mit einer Versorgungsnetzzustandserkennung der Kraftfahrzeugumrichter zu- und/oder abschaltbar ist. Sofern die Batteriespannung des Kraftfahrzeugs (Eingangsspannung) weniger Leistung zur Verfügung stellen kann, erkennt die Versorgungsnetzzustandserkennung beispielsweise durch eine absinkende Versorgungsspannung, dass die Energieversorgung nicht mehr gesichert ist und schaltet den Kraftfahrzeugumrichter ab. Wenn die Batteriespannung wieder vordefinierte Werte erreicht hat, kann die Versorgungsnetzzustandserkennung den Kraftfahrzeugumrichter wieder zuschalten. Auch kann die Versorgungsnetzzustandserkennung den Kraftfahrzeugumrichter nach Stillstand des Motors und/oder nach einer vordefinierten Zeit abschalten.

Eine weitere Schutzmaßnahme des Kraftfahrzeugumrichters besteht darin, dass bei Vorliegen einer Ober- oder Unterspannung des Versorgungsnetzes der Kraftfahrzeugumrichter abschaltbar ist. Somit können Schädigungen der angeschlossenen elektrischen Last oder auch des Kraftfahrzeugumrichters oder auch des Versorgungsnetzes vermieden werden.

Zur Signalisierung ist es vorteilhaft, dass der Kraftfahrzeugumrichter und/oder die Versorgungsnetzzustandserkennung eine optische oder akustische Signalisierung aufweist. Somit lässt sich durch einen Benutzer sofort feststellen, ob ein Kraftfahrzeugumrichter abgeschaltet wurde. Weiterhin ist es denkbar, dass die Signalisierung unter Umständen mit variabler Intensität bereits innerhalb einer vordefinierten Zeit vor Abschaltung einsetzt, so dass einem Benutzer genügend Zeit verbleibt, elektrische Lasten sicher abzuschalten.

Weiterhin vorteilhaft ist es, wenn mit der Signalisierung eine Betriebsbereitschaft des Kraftfahrzeugumrichters oder ein Versorgungsnetzzustand anzeigbar ist. Ein Nutzer kann somit sofort erkennen, ob er eine elektrische Last erfolgreich an den Kraftfahrzeugumrichter anschließen kann.

Eine weitere vorteilhafte Ausgestaltung ist dadurch gegeben, dass durch die Versorgungsnetzzustandserkennung oder durch den Kraftfahrzeugumrichter ein Kennsignal erzeugbar ist, mit dem eine zu erfolgende Abschaltung des Kraftfahrzeugumrichters signalisierbar ist. Das Kennsignal kann beispielsweise mittels eines Datenbusses an weitere Geräte übermittelt werden und zur Koordinierung des Energiehaushaltes des Kraftfahrzeuges verwendet werden. So ist es möglich, je nach-Priorität, elektrische Lasten des Kraftfahrzeuges abzuschalten (z. B. Lüfter, Sitzheizung etc.), um somit die aktuelle Anschaltzeit des Kraftfahrzeugumrichters zu verlängern. Weiterhin ist denkbar, dass eine zu erfolgende Abschaltung auf dem Kombiinstrument der Instrumententafel anzeigbar ist.

Dadurch, dass der Kraftfahrzeugumrichter Mittel zur Überlasterkennung aufweist, mit welchem der Kraftfahrzeugumrichter zumindest für den Zeitraum des Vorliegens einer Überlast abschaltbar ist, lässt sich der Kraftfahrzeugumrichter vorteilhaft für diesen Zustand abschalten. Eine Begrenzung auf die Nennlast durch den Kraftfahrzeugumrichter ist ebenfalls möglich. Einer Schädigung des Systems wird somit entgegengewirkt bzw. verhindert.

Durch eine Übertemperaturerkennung, kann der Kraftfahrzeugumrichter vorteilhaft gegen eine Überhitzung und somit gegen Fehlfunktion und/oder vorzeitigen Ausfall des Geräts geschützt werden. Das Erreichen einer Übertemperatur kann auch durch äußere Einflüsse gefördert werden, beispielsweise wenn durch hohe Sonneneinstrahlungsintensität bereits eine hohe Temperatur am Kraftfahrzeugumrichter vorliegt. Somit kann es sein, dass auch bei Anschluss einer Last kleiner der Nennlast der Betrieb des Kraftfahrzeugumrichters nicht mehr fehlerfrei garantiert werden kann. Eine Überlasterkennung kann dabei vorteilhaft mit einer Übertemperaturerkennung kombiniert werden.

Dadurch, dass der Kraftfahrzeugumrichter mindestens eine Signalleitung zu einem Kraftfahrzeugsteuergerät oder einem Kraftfahrzeugrechner oder einem Kraftfahrzeugdisplay aufweist, können weitere Geräte im Kraftfahrzeug vom Zustand des Kraftfahrzeugumrichters unterrichtet werden und gegebenenfalls Schutz- und/oder Wammaßnahmen (Abschaltung von Verbrauchern, Anzeige von Zustandsdaten des Kraftfahrzeugumrichters) vornehmen.

Anhand der Figuren der Zeichnung werden die Erfindung und vorteilhafte Ausführungsbeispiele erläutert:
- Figur 1:: zeigt eine Prinzipdarstellung eines Kraftfahrzeugumrichters mit Energieversorgung, Laststeckdose, Signalisierung und Signalleitungen,
- Figur 2:: zeigt eine Prinzipdarstellung eines Aktivierungsmechanismus eines Kraftfahrzeugumrichters und
- Figur 3:: zeigt eine Schnittdarstellung eines Aktivierungsmechanismus eines Kraftfahrzeugumrichters.

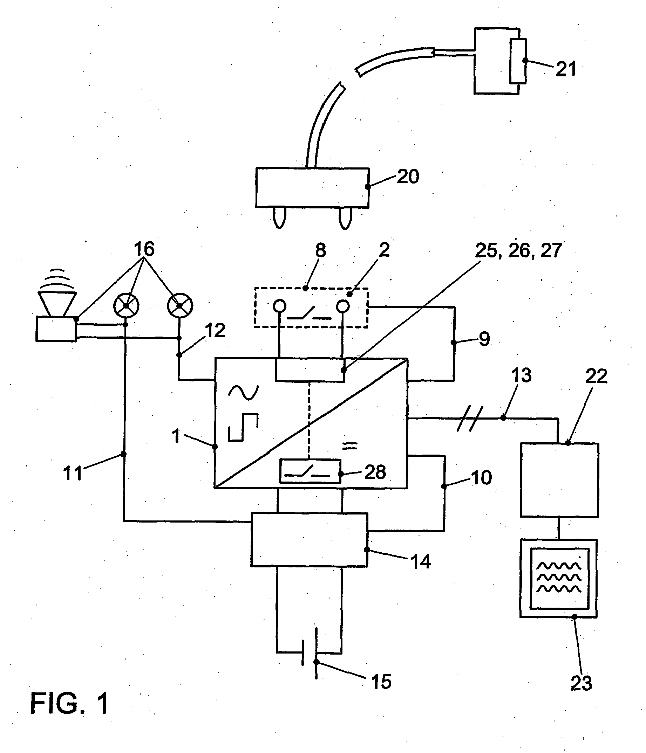

In Figur 1 ist eine Prinzipdarstellung eines Kraftfahrzeugumrichters 1 mit Energieversorgung, Laststeckdose, Signalisierung und Signalleitungen zu erkennen. Der Kraftfahrzeugumrichter 1 ist dabei über nicht näher bezeichnete Energieversorgungsleitungen mit der Versorgungsnetzzustandserkennung 14 verbunden, welche beispielsweise Unter- und Überspannungen der Batterie 15 oder eines Versorgungsnetzes erkennt. Die Batterie 15 wird üblicherweise durch einen nicht dargestellten Generator des Kraftfahrzeuges gespeist. Sofern die Versorgungsnetzzustandserkennung 14 einen kritischen Zustand erkennt, teilt sie dies dem Kraftfahrzeugumrichter 1 über eine Signalleitung 10 mit. Auch eine Signalisierung 16 kann durch die Versorgungsnetzzustandserkennung 14 über die Signalleitung 11 angesteuert werden. Ein Kraftfahrzeugführer oder auch ein Kraftfahrzeugsteuergerät 22 erhält somit ständig Informationen, ob das Versorgungsnetz bzw. die Batterie 15 in einem einwandfreien Zustand sind. Der Kraftfahrzeugumrichter 1 kann über eine eigene Signalisierung 16 verfügen, welche über eine Signalleitung 11, 12 ansteuerbar ist. In einwandfreiem Betriebszustand liefert der Kraftfahrzeugumrichter 1 eine Ausgangsspannung an der Laststeckdose 2, welche eine Gleich- oder Wechselspannung oder eine überlagerte Gleichspannung darstellen kann. Auch ist es denkbar, dass unterschiedliche Ausgangsfrequenzen und Ausgangsnennspannungen direkt am Kraftfahrzeugumrichter 1 oder über ein Kraftfahrzeugsteuergerät 22 einstellbar sind.

Der Kraftfahrzeugumrichter 1 wird über die Signalleitung 9 betriebsbereit geschaltet, sofern eine Mechanik oder auch Mittel zum Sensieren einer elektrischen Last 25 feststellen, dass ein elektrischer Laststecker 20 eingesteckt wurde. Somit wird durch den Kraftfahrzeugumrichter 1 erst eine Verlustleistung erzeugt, wenn auch eine elektrische Last 21 mit Energie zu versorgen ist. Durch die Erfindung wird vermieden, dass der Kraftfahrzeugumrichter 1 auch im Leerlauf unnötig Verlustleistung erzeugt und somit unnötig den Energieversorgungskreis belastet (Batterie wird entladen). Durch die Mittel zum Sensieren einer elektrischen Last 25 bzw. durch Stecken des Laststeckers 20 ist auch gewährleistet, dass elektrische Kontakte 24 erst bei einer Betriebsanforderung (Stecken des Laststeckers 20) eine elektrische Spannung tragen. Somit ist vorteilhaft eine Sicherung gegen ungewolltes Berühren spannungsführender Teile gegeben. Wenn die Laststeckdose 2 sich im hinteren Teil des Fahrzeuges befindet, ist es leicht möglich dass Kinder Gegenstände in die Laststeckdose 2 einstecken. Da der Kraftfahrzeugumrichter 1 nicht betriebsbereit geschaltet ist, können gefährliche Körperspannungen vermieden werden. Die Laststeckdose 2 ist sicher von der Betriebsspannung (Ausgangsspannung des Kraftfahrzeugumrichters 1) getrennt.

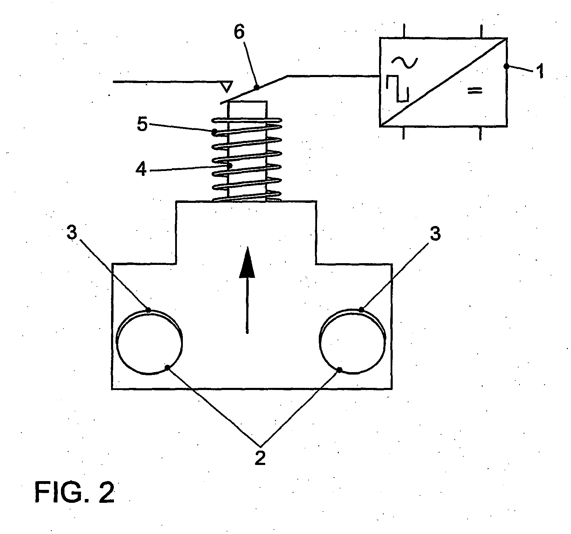

Figur 2 zeigt eine Prinzipdarstellung eines Aktivierungsmechanismus eines Kraftfahrzeugumrichters 1. Wird ein elektrischer Laststecker 20 in die Laststeckdose 2 eingeführt, so wird eine Schutzabdeckung 3 derart mechanisch verschoben, dass ein Betätigungsmechanismus 4 einen Schalter 6 schließt. Dem Kraftfahrzeugumrichter 1 wird somit über ein elektrisches Signal eine Anweisung zur Betriebsbereitschaltung gegeben. Wird der elektrische Laststecker 20 wieder aus der Laststeckdose 2 gezogen, sorgt eine Feder 5 für eine Rückstellung des Betätigungsmechanismus 4. Die Schutzabdeckung 3 verschließt die Laststeckdose 3 derart, dass spannungsführende Teile nicht mehr von außen berührt werden können. Der Schalter 6 öffnet und führt dazu, dass der Kraftfahrzeugumrichter 1 abgeschaltet wird.

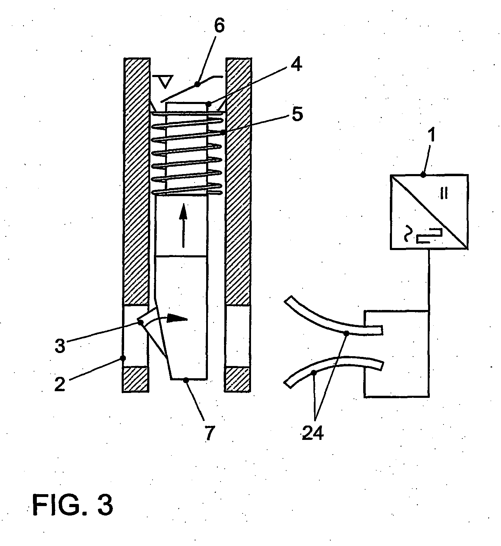

In Figur 3 ist eine Schnittdarstellung eines Aktivierungsmechanismus eines Kraftfahrzeugumrichters 1 dargestellt. Ein elektrischer Laststecker 20 betätigt eine Schutzabdeckung 3 derart, dass ein Rastmechanismus in den Schiebestift 7 eingedrückt wird, so dass der Schiebestift 7 in der Laststeckdose 2 in Pfeilrichtung verschoben werden kann. Dadurch wird eine Feder 5 gespannt und Schalter 6 über einen Betätigungsmechanismus 4 geschlossen. Die Steckkontakte 24 des elektrische Laststeckers 20 können nach Verschiebung des Schiebestiftes 7 durch Öffnungen der Laststeckdose 2 geschoben werden. Beim weiteren Einstecken stellen sie, wie aus handelsüblichen Steckdosen bekannt, einen elektrischen Kontakt her und werden dabei mechanisch verklemmt. Wird der Laststecker 20 aus der Laststeckdose 2 herausgezogen, wird der elektrische Kontakt aufgetrennt als auch der Schiebestift 7 wieder entgegen der Pfeilrichtung durch die Rückstellkraft der Feder 5 in seine Ausgangsposition zurückgeschoben. Sofern der Rastmechanismus in der Schutzabdeckung 3 zu Öffnungen der Laststeckdose 2 gelangt, verrastet er dort und arretiert somit den Schiebestift 7. Gleichzeitig wird eine elektrische Verbindung durch den Schalter 6 aufgetrennt und schaltet über eine nicht dargestellte Signalleitung den Kraftfahrzeugumrichter 1 über einen Ansteuerkreis 28 aus. Damit wird die Batteriespannung nicht mehr umgerichtet und verursacht somit auch keine elektrischen Verluste im Kraftfahrzeugumrichter 1.

Der Kraftfahrzeugumrichter 1 kann zwei oder mehr Laststeckdosen 2 aufweisen, wobei er durch das Stecken des ersten Laststeckers 20 betriebsbereit schaltbar ist. Betriebsbereit bedeutet in diesem Zusammenhang, dass der Kraftfahrz-eugumrichter 1 eine Ausgangsspannung erzeugt oder die Ausgangsspannung an die elektrischen Kontakte 24 anlegt oder der Kraftfahrzeugumrichter 1 überhaupt mit elektrischer Energie versorgt wird, um eine Ausgangsspannung zu erzeugen.

Die Laststeckdose 2 kann Bestandteil des Kraftfahrzeugumrichters 1 sein, sie kann jedoch auch über Anschlussklemmen, -stecker etc. mit diesem verbunden sein. Letzteres kann insbesondere dann vorteilhaft sein, wenn der Kraftfahrzeugumrichter 1 aus Platzbedarfsgründen von der Laststeckdose 2 getrennt werden muss.

### BEZUGSZEICHENLISTE

- 1: Kraftfahrzeugumrichter
- 2: Laststeckdose
- 3: Schutzabdeckung
- 4: Betätigungsmechanismus
- 5: Feder
- 6: Schalter
- 7: Schiebestift
- 8: Mechanik
- 9 bis 13: Signalleitung
- 14: Versorgungsnetzzustandserkennung
- 15: Batterie
- 16: Signalisierung
- 20: Laststecker
- 21: elektrische Last
- 22: Kräftfahrzeugsteuergerät
- 23: Kraftfahrzeugdisplay
- 24: elektrische Kontakte
- 25: Mittel zum Sensieren einer elektrischen Last
- 26: Mittel zur Überlasterkennung
- 27: Mittel zur Übertemperaturerkennung
- 28: Ansteuerkreis

## Patentansprüche

1. Kraftfahrzeugumrichter (1) mit mindestens einer Laststeckdose (2), **dadurch gekennzeichnet, dass** durch das Stecken eines elektrischen Laststeckers (20) in die Laststeckdose (2) der Kraftfahrzeugumrichter (1) betriebsbereit schaltbar ist, wobei
a) der Kraftfahrzeugumrichter (1) oder die Laststeckdose (2) Mittel zum Sensieren einer elektrischen Last (25) aufweist und wobei bei einer an den Kraftfahrzeugumrichter (1) angeschlossenen, sensierten elektrischen Last (21) der Kraftfahrzeugumrichter (1) betriebsbereit schaltbar ist und/oder
b) eine Betriebsbereitschaltung durch einen durch das Stecken des Laststeckers (20) auslösbaren Betätigungsmechanismus (4) in der Laststeckdose (2) durchführbar ist.

2. Kraftfahrzeugumrichter (1) nach einem der vorangehenden Ansprüche, **dadurch gekennzeichnet, dass** elektrische Kontakte (24) der Laststeckdose (2) durch den Betätigungsmechanismus (4) abdeckbar und/oder freigebbar sind.

3. Kraftfahrzeugumrichter (1) nach Anspruch 2, **dadurch gekennzeichnet, dass** mit dem Betätigungsmechanismus (4) und/oder den Mitteln zum Sensieren einer elektrischen Last (25) ein elektrischer Ansteuerkreis (28) des Kraftfahrzeugumrichters (1) aktivierbar ist.

4. Kraftfahrzeugumrichter (1) nach einem der vorangehenden Ansprüche, **dadurch gekennzeichnet, dass** mit dem Kraftfahrzeugumrichter (1) mindestens eine Gleichspannung in mindestens eine Wechselspannung umrichtbar ist.

5. Kraftfahrzeugumrichter (1) nach Anspruch 4, **dadurch gekennzeichnet, dass** die Wechselspannung auf eine Nennspannung kleiner gleich 230 V, insbesondere kleiner gleich 115 V und vorzugsweise kleiner gleich 100 V einstellbar ist.

6. Kraftfahrzeugumrichter (1) nach Anspruch 4 oder 5, **dadurch gekennzeichnet, dass** die Nennfrequenz der Wechselspannung auf 50 Hz oder 60 Hz einstellbar ist.

7. Kraftfahrzeugumrichter (1) nach einem der vorangehenden Ansprüche, **dadurch gekennzeichnet, dass** mit einer Versorgungsnetzzustandserkennung (14) der Kraftfahrzeugumrichter (1) zu- und/oder abschaltbar ist.

8. Kraftfahrzeugumrichter (1) nach einem der vorangehenden Ansprüche, **dadurch gekennzeichnet, dass** der Kraftfahrzeugumrichter (1) bei Vorliegen einer Über- oder Unterspannung des Versorgungsnetzes abschaltbar ist.

9. Kraftfahrzeugumrichter (1) nach einem der vorangehenden Ansprüche, **dadurch gekennzeichnet, dass** der Kraftfahrzeugumrichter (1) und/oder die Versorgungsnetzzustandserkennung (14) eine optische oder akustische Signalisierung (16) aufweist.

10. Kraftfahrzeugumrichter (1) nach Anspruch 5, **dadurch gekennzeichnet, dass** mit der Signalisierung (16) eine Betriebsbereitschaft des Kraftfahrzeugumrichters (1) oder ein Versorgungsnetzzustand anzeigbar ist.

11. Kraftfahrzeugumrichter (1) nach einem der vorangehenden Ansprüche, **dadurch** gekenntzeichnet, dass durch die Versorgungsnetzzustandserkennung (14) oder durch den Kraftfahrzeugumrichter (1) ein Kennsignal erzeugbar ist, mit dem eine zu erfolgende Abschaltung des Kraftfahrzeugumrichters (1) signalisierbar ist.

12. Kraftfahrzeugumrichter (1) nach einem der vorangehenden Ansprüche, **dadurch gekennzeichnet, dass** der Kraftfahrzeugumrichter (1) Mittel zur Überlasterkennung (26) aufweist, mit welchem der Kraftfahrzeugumrichter (1) zumindest für den Zeitraum des Vorliegens einer Überlast abschaltbar ist.

13. Kraftfahrzeugumrichter (1) nach einem der vorangehenden Ansprüche, **dadurch gekennzeichnet, dass** der Kraftfahrzeugumrichter (1) Mittel zur Übertemperaturerkennung (27) aufweist, mit welchem der Kraftfahrzeugumrichter (1) zumindest für den Zeitraum des Vorliegens einer Übertemperatur abschaltbar ist.

14. Kraftfahrzeugumrichter (1) nach einem der vorangehenden Ansprüche, **dadurch gekennzeichnet, dass** der Kraftfahrzeugumrichter (1) mindestens eine Signalleitung (13) zu einem Kraftfahrzeugsteuergerät (22) oder einem Kraftfahrzeugrechner oder einem Kraftfahrzeugdisplay (23) aufweist.

## Claims

1. Converter (1) for a motor vehicle, having at least one load socket (2), **characterized in that** the converter (1) for a motor vehicle can be made ready for operation by inserting an electrical load connector (20) into the load socket (2),
a) the converter (1) for a motor vehicle or the load socket (2) having means (25) for sensing an electrical load (25) and it being possible to make the converter (1) for a motor vehicle ready for operation when an electrical load (21) which is connected to the converter (1) for a motor vehicle is sensed and/or
b) it being possible to make it ready for operation by an operating mechanism (4) in the load socket (2), it being possible to trigger this operating mechanism by inserting the load connector (20).

2. Converter (1) for a motor vehicle according to Claim 1, **characterized in that** electrical contacts (24) of the load socket (2) can be covered and/or exposed by the operating mechanism (4).

3. Converter (1) for a motor vehicle according to claim 2, **characterized in that** an electrical actuating circuit (28) of the converter (1) for a motor vehicle can be activated by the operating mechanism (4) and/or the means (25) for sensing an electrical load.

4. Converter (1) for a motor vehicle according to one of the preceding claims, **characterized in that** at least one DC voltage can be converted into at least one AC voltage by the converter (1) for a motor vehicle.

5. Converter (1) for a motor vehicle according to claim 4, **characterized in that** the AC voltage can be set to a rated voltage of less than or equal to 230 V, in particular less than or equal to 115 V and preferably less than or equal to 100 V.

6. Converter (1) for a motor vehicle according to claim 4 or 5, **characterized in that** the rated frequency of the AC voltage can be set to 50 Hz or 60 Hz.

7. Converter (1) for a motor vehicle according to one of the preceding claims, **characterized in that** the converter (1) for a motor vehicle can be switched on and/or off by a supply network state recognition means (14).

8. Converter (1) for a motor vehicle according to one of the preceding claims, **characterized in that** the converter (1) for a motor vehicle can be switched off when there is an overvoltage or undervoltage in the supply network.

9. Converter (1) for a motor vehicle according to one of the preceding claims, **characterized in that** the converter (1) for a motor vehicle and/or the supply network state recognition means (14) have/has an optical or acoustic signalling system (16).

10. Converter (1) for a motor vehicle according to claim 5, **characterized in that** the readiness of the converter (1) for a motor vehicle to operate, or a supply network state, can be indicated by the signalling system (16).

11. Converter (1) for a motor vehicle according to one of the preceding claims, **characterized in that** an identification signal can be produced by the supply network state recognition means (14) or by the converter (1) for a motor vehicle and can be used to signal that the converter (1) for a motor vehicle should be switched off.

12. Converter (1) for a motor vehicle according to one of the preceding claims, **characterized in that** the converter (1) for a motor vehicle has means (26) for overload identification, which means can be used to switch off the converter (1) for a motor vehicle at least for the duration of an overload.

13. Converter (1) for a motor vehicle according to one of the preceding claims, **characterized in that** the converter (1) for a motor vehicle has means (27) for overtemperature identification, which means can be used to switch off the converter (1) for a motor vehicle at least for the duration of an overtemperature.

14. Converter (1) for a motor vehicle according to one of the preceding claims, **characterized in that** the converter (1) for a motor vehicle has at least one signal line (13) to a motor vehicle controller (22) or to a motor vehicle computer or to a motor vehicle display (23).

## Revendications

1. Convertisseur de véhicule automobile (1) avec au moins une prise de courant pour la charge (2), **caractérisé en ce que** le fait de brancher une fiche de la charge électrique (20) dans la prise de courant pour la charge (2) rend le convertisseur de véhicule automobile (1) prêt à être mis en service, dans lequel
a) le convertisseur de véhicule automobile (1) ou la prise de courant pour la charge (2) comporte des moyens pour détecter une charge électrique (25) et dans lequel la détection d'une charge électrique (21) raccordée au convertisseur de véhicule automobile (1) rend le convertisseur de véhicule automobile (1) prêt à être mis en service, et/ou
b) il est possible d'effectuer une mise en service au moyen d'un mécanisme de commande (4) pouvant être déclenché par le branchement de la fiche de la charge (20) dans la prise de courant pour la charge (2).

2. Convertisseur de véhicule automobile (1) selon la revendication 1, **caractérisé en ce que** des contacts électriques (24) de la prise de courant pour la charge (2) peuvent être couverts et/ou libérés par le mécanisme de commande (4).

3. Convertisseur de véhicule automobile (1) selon la revendication 2, **caractérisé en ce qu'**il est possible d'activer un circuit de commande électrique (28) du convertisseur de véhicule automobile (1) à l'aide du mécanisme de commande (4) et/ou des moyens pour détecter une charge électrique (25).

4. Convertisseur de véhicule automobile (1) selon une des revendications précédentes, **caractérisé en ce qu'**il est possible de convertir au moins une tension continue en au moins une tension alternative à l'aide du convertisseur de véhicule automobile (1).

5. Convertisseur de véhicule automobile (1) selon la revendication 4, **caractérisé en ce que** la tension alternative peut être réglée sur une tension nominale inférieure à 230 V, notamment inférieure à 115 V et de préférence inférieure à 100 V.

6. Convertisseur de véhicule automobile (1) selon la revendication 4 ou 5, **caractérisé en ce que** la fréquence nominale de la tension alternative peut être réglée sur 50 Hz ou 60 Hz.

7. Convertisseur de véhicule automobile (1) selon une des revendications précédentes, **caractérisé en ce que** le convertisseur de véhicule automobile (1) peut être enclenché et/ou arrêté à l'aide de la détection de l'état du réseau d'alimentation (14).

8. Convertisseur de véhicule automobile (1) selon une des revendications précédentes, **caractérisé en ce que** le convertisseur de véhicule automobile (1) peut être arrêté en présence d'une surtension ou d'une sous-tension du réseau d'alimentation.

9. Convertisseur de véhicule automobile (1) selon une des revendications précédentes, **caractérisé en ce que** le convertisseur de véhicule automobile (1) et/ou la détection de l'état du réseau d'alimentation (14) comporte une signalisation (16) optique ou acoustique.

10. Convertisseur de véhicule automobile (1) selon la revendication 5, **caractérisé en ce que** la signalisation (16) permet d'afficher une mise en service du convertisseur de véhicule automobile (1) ou un état du réseau d'alimentation.

11. Convertisseur de véhicule automobile (1) selon une des revendications précédentes, **caractérisé en ce que** la détection de l'état du réseau d'alimentation (14) ou le convertisseur de véhicule automobile (1) permet de générer un signal de détection permettant de signaler un arrêt du convertisseur de véhicule automobile (1) qui en découle.

12. Convertisseur de véhicule automobile (1) selon une des revendications précédentes, **caractérisé en ce que** le convertisseur de véhicule automobile (1) comporte des moyens de détection de la surcharge (26) permettant d'arrêter le convertisseur de véhicule automobile (1) au moins pendant la durée d'existence d'une surcharge.

13. Convertisseur de véhicule automobile (1) selon une des revendications précédentes, **caractérisé en ce que** le convertisseur de véhicule automobile (1) comporte des moyens de détection de température excessive (27) permettant d'arrêter le convertisseur de véhicule automobile (1) au moins pendant la durée de présence d'une température excessive.

14. Convertisseur de véhicule automobile (1) selon une des revendications précédentes, **caractérisé en ce que** le convertisseur de véhicule automobile (1) comporte au moins une ligne de signaux (13) vers un dispositif de commande du véhicule automobile (22) ou vers un ordinateur du véhicule automobile ou vers un afficheur du véhicule automobile (23).
